# FASCICULE DE BREVET EUROPEEN

(11) **EP 0 381 601 B1**
(45) Date de publication et mention de la délivrance du brevet: **09.03.1994**
(21) Numéro de dépôt: 90420047.4
(22) Date de dépôt: 30.01.1990
(51) Int. Cl.: B01D 53/34

(54) **Perfectionnements aux procédés d'épuration des fumées**
Rauchgasreinigungsverfahren
Flue gas purification process

(30) Priorité: 01.02.1989 FR 8901503
(43) Date de publication de la demande: 08.08.1990
(73) Titulaire: LAB S.A., 69003 Lyon (FR)
(72) Inventeur: Vicard, Jean-François, F-69002 Lyon (FR)
(74) Mandataire: Monnier, Guy

(56) Documents cités:
- EP-A- 0 243 664
- DE-A- 3 322 694
- FR-A- 2 547 210
- CHEMIE-INGENIEUR-TECHNIK vol. 60, no. 4, 1988, WEINHEIM,GERMANY,pages 247 -255; H.VOGG: "Von der Schadstoffquelle zur Schadstoffsenke - neue Konzepte der Müllverbrennung"

## Description

La présente invention se réfère aux procédés d'épuration des fumées par voie humide.

Dans ces procédés un liquide de lavage est mis en contact avec les fumées à épurer dans un laveur. Les poussières en suspension dans les gaz sont transférées dans le liquide de lavage et en même temps les polluants gazeux sont absorbés par le liquide de lavage suivant leur solubilité et les caractéristiques de ce liquide de lavage. Le débit de liquide de lavage nécessaire pour épurer les fumées étant en général important, le liquide de lavage est recyclé dans le laveur et une purge de déconcentration aussi faible que possible extrait de l'ensemble laveur-circuit de recyclage les polluants captés.

Par exemple dans le cas des usines d'incinération d'ordures ménagères, les ordures ménagères sont détruites et remplacées par un mâchefer. Les fumées produites véhiculent l'énergie récupérée et des polluants sous formes particulaires et gazeuses. Les plus sensibles sont HCl, HF, SO2, Les métaux lourds à l'état particulaire ou gazeux. Une fois captés, ces polluants doivent trouver une destination : réutilisation ou mise en décharge. De très nombreux procédés ont été proposés pour conditionner le résidu de manière à faciliter la mise en décharge ou la réutilisation comme matériau de construction. L'inconvenient de ces procédés est de devoir traiter des quantités importantes en mélangeant une faible proportion d'éléments toxiques et une forte proportion d'élément inertes.

De ce point de vue, il est utile de séparer les éléments toxiques, comme les métaux lourds, des inertes avant traitement spécifique.

Différents procédés ont été proposés à cet effet. Ils comportent, le plus souvent, une séparation des poussières (cendres volantes) dans un électrofiltre, suivie d'une absorption gazeuse dans un laveur. La purge de déconcentration de ce laveur est acide et est utilisée dans une installation séparée pour lixivier les cendres volantes captées dans l'électrofiltre. Il est ainsi possible de produire un résidu solide lixivié en phase acide et un effluent liquide chargé en métaux lourds qui sont ensuite précipités dans une installation classique de traitement d'eau ou extraits sélectivement pour récupération.

Dans FR-A-2 547 210 (KERNFORSCHUNGSZENTRUM KARLSSRUHE GMBH) est décrit un procédé pour l'épuration des fumées formées lors de l'incinération des déchets, suivant lequel lesdites fumées, après séparation des constituants solides principaux recueillis sous forme de cendres volantes, sont introduites dans un laveur aux fins de combiner les gaz nocifs, en particulier acides. Ce laveur condense, outre la vapeur d'eau contenue dans les fumées, les métaux lourds et autres gaz nocifs, le condensat obtenu étant acide. Il est utilisé dans une installation extérieure au laveur et à son éventuel circuit de recyclage pour lixivier en phase acide les cendres volantes recueillies en amont du laveur. Les matières ainsi dissoutes en phase acide sont ensuite précipitées avant d'être éventuellement envoyées à une récupération de métaux. Tous les autres résidus sont avantageusement retournés dans la chambre d'incinération pour y être combinés avec la scorie par un traitement à haute température, en redevenant ainsi réutilisables.

Un des inconvénients de cette méthode est que le volume du condensat étant faible, il est difficile de contrôler effectivement le pH acide de lixiviation, à défaut d'avoir recours à des installations de lixiviation de très grande capacité, dont encombrantes et coûteuses.

Il est aussi connu (cf. DE-A-3322694-L et C. STEINMUELLER GMBH) de réaliser en même temps dépoussiérage et absorption gazeuse dans le même laveur et de recycler dans ce laveur les poussières captées afin de maximiser l'utilisation des alkalins des poussières pour neutraliser les gaz acides.

Mais cette méthode ne traite pas les poussières éventuellement captées en amont. De plus, elle exige un laveur beaucoup plus important et coûteux puisque le laveur doit dans ce procédé capter aussi la totalité des poussières ou tout au moins la plus grande partie de celles-ci.

La présente invention vise à supprimer l'adjonction d'une installation supplémentaire complexe et à utiliser judicieusement les capacités du laveur qui, comme on l'a indiqué plus haut, est nécessairement équipé d'un important circuit de recyclage du liquide de lavage pour pouvoir assurer sa fonction d'épuration des fumées. L'expérience montre, d'ailleurs de manière surprenante, que la lixiviation pratiquée dans un tel circuit de recyclage de fort débit est beaucoup plus facile à contrôler en vue de la lixiviation acide des cendres volantes.

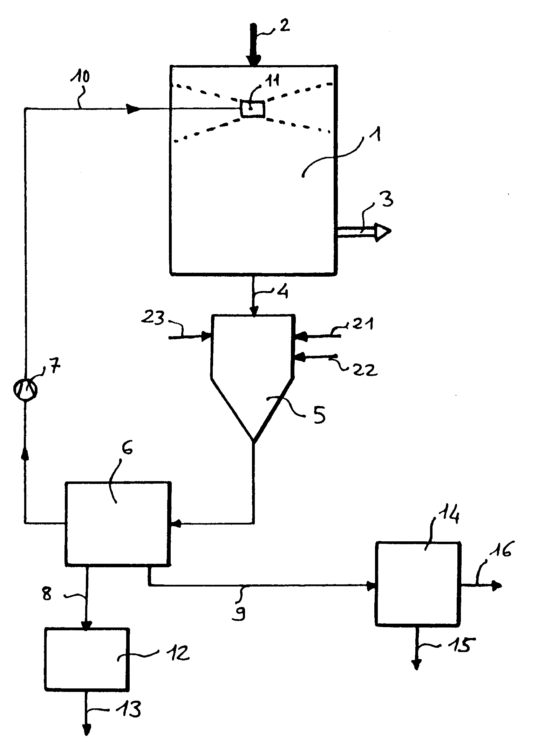

Suivant l'invention et comme illustré sur le dessin annexé, les fumées à épurer (2) pénètrent dans le laveur (1) où elles sont contactées par le liquide de lavage recyclé (10) réparti dans les gaz par un dispositif approprié (11). Elles sortent du laveur épurées (3). Le liquide de lavage (10) introduit dans le laveur (1), après contact avec les gaz, est récupéré (4) dans un bac (5) qui peut être aménagé dans la base du laveur (1). Une adjonction d'agent acide (21) peut être faite dans ce bac dans le cas où les fumées n'apportent pas une quantité suffisante d'agent acide pour la lixiviation acide. De même une adjonction d'agent neutralisant (22) est faite pour maintenir le pH du liquide de lavage en zone acide. Cette adjonction n'est pas nécessaire si les cendres volantes captées apportent ellesmêmes une quantité suffisante d'alcalinité. Enfin, on injecte aussi dans ce bac (5) les cendres volantes (23) qui auraient été captées en amont du laveur. Un dispositif (6) est inséré sur le circuit de recyclage comportant une pompe (7). Il peut, à titre d'exemple, comporter un hydrocyclone traitant tout le débit d'eau de lavage avec une surverse alimentant le laveur (1) et une sous-verse alimentant un filtre produisant un résidu solide (8) et une purge liquide (9) contenant les éléments solubles et/ou lixiviés.

Une installation de traitement (14) de cet effluent permet d'extraire, par exemple, les métaux lourds (15) d'un liquide clair (16) ne contenant plus ces éléments toxiques. Dans ce cas, l'installation de traitement est de plus faible capacité que dans les solutions classiques. Pour le résidu solide (8) un traitement (12) complémentaire peut être nécessaire pour la mise en décharge ou la réutilisation. Une variante intéressante concerne les installations de combustion de combustibles solides produisant des mâchefers. Le résidu solide (13) ou (8) peut alors être réintroduit dans cette installation de combustion pour être fondu dans le mâchefer, le résidu solide ayant été débarrassé des éléments facilement volatilisables.

## Revendications

1. Procédé d'épuration des fumées, dans lequel les fumées chargées en polluants (2), après captation totale ou partielle des cendres volantes, sont épurées par voie humide dans un laveur (1), équipé d'un important circuit de recyclage (4, 5, 7, 10) du liquide de lavage (10) pour pouvoir assurer sa fonction d'épuration des fumées, ce circuit de recyclage comportant un bac de recyclage (5) récupérant le liquide de lavage sortant du laveur (1) et pouvant être aménagé dans la base du laveur (1), ainsi qu'une purge de déconcentration des polluants captés, caractérisé en ce que :
a) on introduit dans le liquide de lavage sortant du laveur (1) les poussières (23) captées en amont de celui-ci ;
b) on introduit dans le liquide de lavage sortant du laveur (1) un agent acide (21) dans le cas où les fumées (2) n'apportent pas une quantité suffisante d'agent acide pour la lixiviation acide ;
c) pour maintenir en zone acide le pH du liquide de lavage sortant du laveur (1), on introduit dans ce liquide de lavage un agent neutralisant (22) dans le cas où les centres volantes captées (23) n'apportent pas elles-mêmes une quantité suffisante d'alcalinité ;
d) et on fait ensuite passer la totalité du liquide de lavage dans un dispositif de séparation des particules en suspension (6) dont la sur-verse alimente le laveur en liquide de lavage (10) tandis que la sous-verse présente d'une part un résidu solide (8), d'autre part une purge liquide (9) pour la déconcentration des éléments solubilisés.

2. Procédé suivant la revendication 1, caractérisé en ce que le résidu solide (8) sortant du dispositif de séparation (6) est soumis à un traitement (12) avec ou sans additif.

3. Procédé suivant la revendication 2, caractérisé en ce que dans le cas où les fumées sont émises par une installation de combustion de combustibles solides produisant un mâchefer, le traitement du résidu solide (12) comporte in fine l'injection dudit résidu dans l'installation de combustion.

4. Procédé suivant l'une quelconque des revendications 1 à 3, caractérisé en ce que la purge liquide (9) sortant du dispositif de séparation (6) est soumise à un traitement (14) permettant de séparer les polluants dissous (15) et le liquide clair (16).

## Patentansprüche

1. Verfahren zur Abgasreinigung, bei dem die mit Verunreinigungen Abgase (2), nach vollständiger oder teilweiser Abtrennung der Flugasche durch Naßabscheidung in einem im wesentlichen mit einer im Kreislauf (4, 5, 7, 10) geführten, wiederverwendbaren Waschflüssigkeit (10) betriebenen Wäscher (1) gereinigt werden, wobei zur Sicherung seiner Funktion der Rauchgasreinigung der Kreislauf einem Aufbereitungsbehälter (5) zur Zurückgewinnung der aus dem Wäscher (1) austretenden Waschflüssigkeit aufweist, und wobei der Behälter an der Grundseite des Wäschers (1) angeordnet ist und an dem ein Ablauf zur Dekonzentrierung der aufgefangenen Verunreinigungen vorhanden ist, **dadurch gekennzeichnet**
a) daß der aus dem Wäscher (1) ablaufenden Waschflüssigkeit oberhalb dieses abgeschiedenen Stäube (23) zugesetzt wird;
b) daß der aus dem Wäscher (1) ablaufenden Waschflüssigkeit für den Fall, daß die Abgase (2) eine nicht ausreichende Menge von saurem Mittel mit sich führen für die saure Auslaugung, ein saures Mittel (21) zugesetzt wird;
c) daß, um einen saueren PH-Bereich der ablaufenden Waschflüssigkeit aus dem Wäscher zu erhalten, der Waschflüssigkeit ein Neutralisierungsmittel (22) für den Fall, daß die abgeschiedenen Flugaschen (23) nicht selbst diese hinreichende alkalische Menge mit sich führen zugegeben wird.
d) und daß danach die gesamte Waschflüssigkeit in eine Trenneinrichtung (6) zur Abtrennung der in der Suspension befindlichen Partikel strömt, deren Oberströmung den Wäscher mit Waschflüssigkeit (10) speist, während die Unterströmung einen Teil von zurückbleibenden festen Bestandteilen (8) aufweist, wobei der andere Teil durch einen Ablauf (9) zur Dekonzentration der löslichen Bestandteile geführt wird.

2. Verfahren nach Anspruch 1, **dadurch gekennzeichnet**, daß die aus der Trenneinrichtung (6) austretenden festen Bestandteile (8) einer Behandlung (12) der Flüssigkeit mit oder ohne Zusatz unterzogen werden.

3. Verfahren nach Anspruch 2, **dadurch gekennzeichnet**, daß für den Fall, wo die Rauchgase durch eine Verbrennungseinrichtung für brennbare Feststoffe mit Schlackenbildung geleitet werden, die Behandlung der festen zurückbleibenden Bestandteile (12) durch Einblasung von Kohlenstaub in die Verbrennungsanlage besteht.

4. Verfahren nach einem der Ansprüche 1 bis 3, **dadurch ge****kennzeichnet,** daß die aus der Trennvorrichtung (6) austretende Ablaufflüssigkeit (9) einer Nachbehandlung (14) unterzogen wird, die die Trennung der verunreinigenden, abgetrennten Bestandteile (15) und der klare Flüssigkeit (16) ermöglicht.

## Claims

1. A method for purifying waste gases, in which the waste gases laden with pollutants (2), after the total or partial collection of the fly ash, are wet-purified in a washer (1), equipped with a major recycling circuit (4, 5, 7, 10) for the washing liquid (10) in order to be able to perform its function of purifying the waste gases, this recycling circuit comprising a recycling tank (5) which recovers the washing liquid emerging from the washer (1) and which can be provided in the base of the washer (1), and also a drain means for the deconcentration of the pollutants collected, characterised in that:
a) the dust (23) collected upstream of the washer (1) is introduced into the washing liquid emerging therefrom;
b) an acidic agent (21) is introduced into the washing liquid emerging from the washer (1) in the event that the waste gases (2) do not supply a sufficient quantity of acidic agent for acidic lixiviation;
c) in order to keep the pH of the washing liquid emerging from the washer (1) within the acidic zone, a neutralising agent (22) is introduced into this washing liquid in the event that the fly ash collected (23) does not itself supply a sufficient amount of alkalinity;
d) and then all the washing liquid is passed into a device for separating the particles in suspension (6), the overflow fraction of which feeds the washer with washing liquid (10) while the underflow fraction thereof firstly has a solid residue (8), and secondly a liquid drain means (9) for the deconcentration of the solubilised elements.

2. A method according to Claim 1, characterised in that the solid residue (8) emerging from the separating device (6) is subjected to treatment (12) with or without an additive.

3. A method according to Claim 2, characterised in that in the event that the waste gases are emitted by an installation for the combustion of solid fuels producing a clinker, the treatment of the solid residue (12) comprises at the end the injection of said residue into the combustion installation.

4. A method according to any one of Claims 1 to 3, characterised in that the liquid discharged (9) emerging from the separating device (6) is subjected to treatment (14) making it possible to separate the dissolved pollutants (15) and the clear liquid (16).
